(19) Europäisches Patentamt
European Patent Office
Office européen des brevets

(11) **EP 2 172 378 B1**

(12) **EUROPEAN PATENT SPECIFICATION**

(45) Date of publication and mention
of the grant of the patent:
**03.07.2019 Bulletin 2019/27**

(51) Int Cl.:
***B60T 8/1755*** *(2006.01)*   ***B60T 8/1766*** *(2006.01)*
*B60W 20/00* *(2016.01)*

(21) Application number: **08165945.0**

(22) Date of filing: **06.10.2008**

(54) **A method and device for regenerative braking in a vehicle**

Verfahren und Vorrichtung zum regenerativen Bremsen in einem Fahrzeug

Procédé et dispositif pour le freinage par récupération d'un véhicule

(84) Designated Contracting States:
**DE GB SE**

(43) Date of publication of application:
**07.04.2010 Bulletin 2010/14**

(73) Proprietor: **Volvo Car Corporation**
**405 31 Göteborg (SE)**

(72) Inventors:
• **Solyom, Stefan**
**424 70, Olofstorp (SE)**

• **Eriksson, Björn**
**582 17, Linköping (SE)**

(74) Representative: **Kransell & Wennborg KB**
**P.O. Box 2096**
**403 12 Göteborg (SE)**

(56) References cited:
**EP-A- 1 555 184**    **US-A- 5 654 887**
**US-A1- 2004 046 448**    **US-A1- 2006 055 239**

**Description**

TECHNICAL FIELD:

The present invention relates to a method for control of renegenerative braking in a vehicle being provided with: a front axle and a rear axle being provided with front wheels and rear wheels; an internal combustion engine; an electric motor; and a control unit for controlling the operation of the electric motor to selectively be operated either for propelling the rear axle or for braking the rear axle in a regenerative manner. Such a method is known from US 2004/046448 A, which constitutes the closest prior art.

The present invention also relates to a device for control of renegenerative braking in a vehicle comprising: a front axle and a rear axle being provided with front wheels and rear wheels; an internal combustion engine; an electric motor and controllable braking means; said device comprising a control unit for controlling the operation of the electric motor to be selectively operated either for propelling the rear axle or for braking the rear axle in a regenerative manner.

STATE OF THE ART:

In the field of vehicles which are powered by means of internal combustion engines, there is a need to reduce fuel consumption and emissions. For this reason, electric motors have become an important alternative to the conventional combustion engine. Another solution is to combine a relatively small internal combustion engine with one or more electric motors in the same vehicle. Such vehicles are referred to as hybrid electric vehicles (HEV). In this manner, the advantages of an internal combustion engine and an electric engine can be combined. An important purpose of such an arrangement is also to obtain an improved fuel economy and lower emissions of harmful pollutants, as compared with a conventional vehicle.

A hybrid electric vehicle is normally provided with a conventional internal combustion engine and a electric motor with a rechargeable energy storage system. Such an energy storage system is normally in the form of a chargeable battery or a capacitor.

In order to use the energy storage system in an efficient manner, it is known to design a hybrid electric vehicle so that the kinetic energy which arises during braking is captured and accumulated in a suitable manner. This is referred to as regenerative braking. More precisely, such regenerative braking converts, by means of a generator, the captured kinetic energy into electrical energy in the form of a stored charge which is accumulated in the above-mentioned energy storage system. This stored energy is later used to operate the electric motor in the vehicle. Consequently, regeneration contributes to reducing fuel usage and emission production in the vehicle.

Regenerative braking in various forms is previously known from the patent document US 7001306, which shows a brake control apparatus in a vehicle which is arranged for distributing the engine braking torque to the wheels of the vehicle.

In the technical field in question, there is a constant demand for improvements. In particular there is a problem of finding an optimum balance between the requirement of optimizing the regenerative effect during braking and the requirement for stable handling of the vehicle, the latter requirement being of importance for reasons of comfort and safety for the occupants of the vehicle.

SUMMARY OF THE INVENTION:

An object of the present invention is to provide a system and method for regenerative braking in a hybrid electric vehicle which in particular solves the problem of maximizing energy recovery while maintaining vehicle controllability and stability.

This object is achieved by means of a method of the type mentioned initially which comprises the steps of: estimating a value of the maximum level of braking force being applied to said rear axle; determining a degree of instability of said vehicle; and gradually shifting the braking force from said rear axle to said front axle depending of the degree of instability.

The object is also achieved by means of a system of the kind mentioned initially which comprises means for estimating a value of the maximum level of braking force being applied to said rear axle, for determining a degree of instability of said vehicle; and for gradually shifting the braking force from said rear axle to said front axle depending of the degree of instability.

By means of the invention, an advantage is obtained through the fact that it provides a method and device which is used to maximize the regenerative braking force on the rear axle of a hybrid electric vehicle while still maintaining a stable vehicle.

BRIEF DESCRIPTION OF THE DRAWINGS:

The invention will now be described in more detail with reference to a preferred exemplary embodiment and to the attached drawings, in which:

Fig. 1        is a schematic drawing of a vehicle being equipped with an arrangement in accordance with the present invention; and

Fig. 2        shows, in a schematical manner, the so-called quarter car model;

Fig. 3        shows, in a schematical manner, a model to be used during the control of the regenerative braking according to the invention;

Fig. 4        shows the manner in which the three algorithms according to the invention cooperate; and

Figs.5-10   show various diagrams which illustrate certain experimental tests which have been carried out using the invention.

PREFERRED EMBODIMENT:

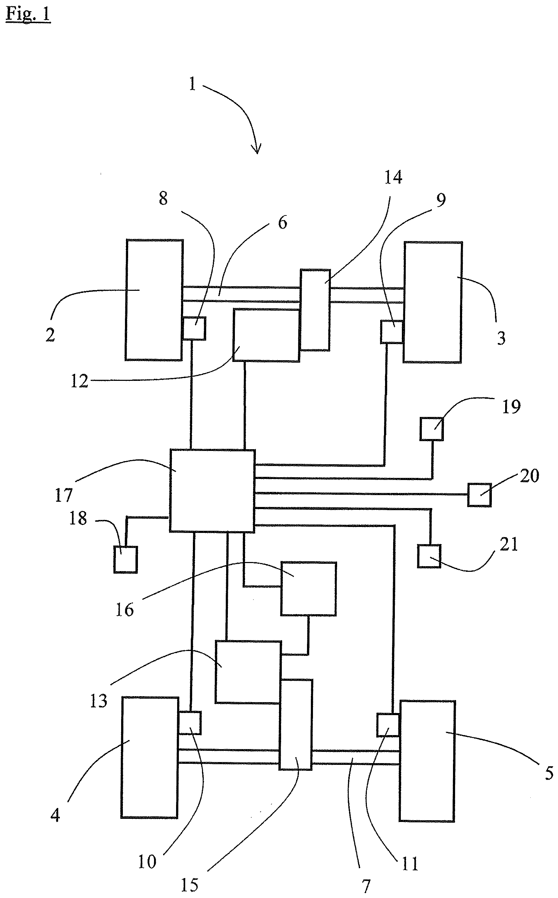

With reference to Figure 1, there is shown a schematic drawing of a vehicle 1 of the hybrid electric type. The vehicle 1 comprises a left front wheel 2, a right front wheel 3, a left rear wheel 4 and a right rear wheel 5. The left front wheel 2 and the right front wheel 3 are arranged on a front axle 6, whereas the left rear wheel 4 and the right rear wheel 5 are arranged on a rear axle 7.

Furthermore, a set of wheel brakes is provided. These wheel brakes are preferably of the friction brake type and are constituted by a left front wheel brake 8, a right front wheel brake 9, a left rear wheel brake 10 and a right rear wheel brake 11.

The vehicle 1 is of the hybrid electric type, and for this reason it is powered by means of a combination of a combustion engine 12 and an electric motor 13. The combustion engine 12 is preferably a gasoline engine but may alternatively be of the diesel type. According to the embodiment, the combustion engine 12 is arranged for front wheel propulsion and for this reason, it is connected to and associated with a transmission 14 in a manner which is generally known. For this reason, it is not described in greater detail here. Also, the electric motor 13 is arranged so as to operate alternately as a propulsion device for the rear axle 7 and as a generator during braking of the rear axle 7, i.e. during regenerative braking of the vehicle 1 using the electric motor 13. The electric motor 13 is operatively connected to the rear axle 7 via a further transmission 15.

Furthermore, the electric motor 13 is powered by means of an energy storage unit 16 which is preferably in the form of a rechargeable battery. Also, the electric motor 13 is connected to a control unit 17 which is adapted for selectively operating the electric motor 13 either for propelling the vehicle 1 by driving the rear axle 7 or for braking the vehicle 1, i.e. by braking the rear axle 7. The electric motor 13 is arranged for regenerative braking, i.e. for capturing the kinetic energy of the vehicle 1 as it decelerates. During regenerative braking, the generator is arranged for providing electricity to the energy storage unit 16. This stored electricity can later be used, for example, for propelling the rear axle 7 by means of the electric motor 13. The selection of whether the vehicle 1 should be operated in a manner so as to propel the rear axle 7 or brake the rear axle 7 is determined by means of detection of various sensors within the vehicle 1. For example, there is provided an accelerator sensor 18 for detecting the position of a (not shown) accelerator pedal in the vehicle 1. Also, there is provided a brake pedal sensor 19 for detecting the position of a (not shown) brake pedal in the vehicle 1. According to the embodiment, the vehicle 1 preferably also comprises a vehicle speed sensor 20 and a steering wheel angle sensor 21.

Preferably, the control unit 17 is arranged as a single control unit or as a cluster of control units in the vehicle 1. Irrespective of which arrangement is used, the control unit 17 is depicted in a simplified manner as one single unit in Fig. 1.

The control unit 17 is arranged for applying a braking force upon the vehicle 1 in a suitable manner depending on the operating conditions of the vehicle in any given instant and also depending on, for example, commands from the driver of the vehicle 1, which are detected by means of the brake pedal sensor 19. More precisely, the braking force is controlled by controlling the operation of the electric motor 13 and controlling the operation of the friction brakes 8, 9, 10, 11. During braking, the control unit 17 is operating in a manner so as to assure that the braking force acting upon each wheel 2, 3, 4, 5 is sufficient, for example with regard to the requests from the driver.

Furthermore, the control unit 17 is arranged for operating the combustion engine 12 and the electric motor 13 in a suitable manner, for example by using the electric motor 13 during certain driving conditions and using the combustion engine 12 during other driving conditions, for example as an alternative source of power in case the charge of the energy storage unit 16 is considered not to be sufficient in order to operate the vehicle 1 in a safe or suitable manner. In such case, the combustion engine 12 is used as a primary drive source in the vehicle 1. The principles for the choice between the combustion engine 12 and the electric motor 13 are previously known as such, and for this reason they are not described in detail here.

All the sensors 18, 19, 20, 21 mentioned above are connected to the control unit 17 and are used in order to control the operation of the combustion engine 12 and the electric motor 13. Furthermore, the control unit 17 is connected to the combustion engine 12 and various other sensors (not shown) in order to control the operation of the combustion engine 12, i.e. the ignition timing, the fuel injection etc., according to generally known principles.

The invention is based on the general principle that the vehicle 1 is arranged for regenerative braking by means of the electric motor 1. It is advantageous to provide such regenerative braking primarily on the rear axle 7 (as opposed to the front axle 6) since there is less friction to overcome during braking on the rear axle 7. This is due to the fact that the combustion engine 12 and its transmission 14 are connected to the front axle 6. As a result, regenerative braking via the rear axle 7 constitutes a more efficient recycling of the available kinetic energy. However, a potential disadvantage of regenerative braking on the rear axle 7 is that it may cause the vehicle to become unstable, which is a disadvantage as regards the handling and the comfort of the vehicle 1 during driving. In other words, if the regenerative braking is only applied to the rear axle 7, the vehicle 1 may not not always follow its intended course of travel during driving. This is obviously a disadvantage, since it affects the handling and steering of the vehicle 1. The present invention aims at solving this problem.

In order to solve the above-mentioned problem, the invention is arranged so as to distribute the braking force in a suitable manner between the front axle 6 and the rear axle 7, while taking into account that the braking force on the rear axle 7 should be as high as possible. This means that the basic rule when determining whether a braking force should be applied to the front axle 6 and the rear axle 7 is that the rear axle 7 should have as high braking force as possible (since there is less friction involved when braking the rear axle 7).

According to an embodiment, the invention proposes a method for determining a maximum value of the regenerative torque for the rear axle 7, i.e. for determining an input value of the maximum braking force to be applied on the rear axle 7 during regenerative braking. More precisely, the control unit 17 is arranged to determine a suitable, optimized way of maximizing the brake torque applied to the rear axle 7 while still maintaining a stable operation of the vehicle 1, i.e. essentially without losing traction.

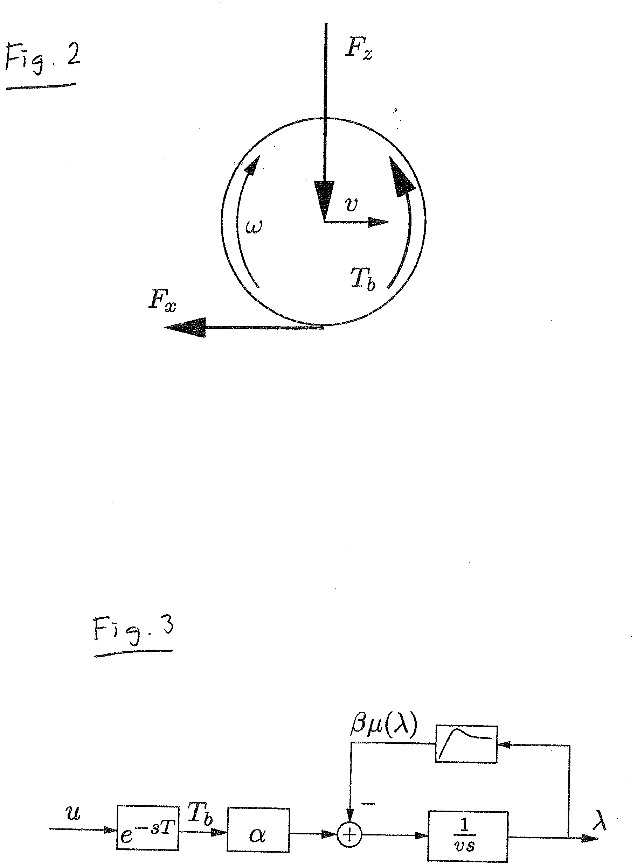

A way of understanding the underlying control problem is by looking at the so-called quarter car model. This model consists of a single wheel attached to a mass, as shown in Fig. 2.

The equations of motion of the quarter car, in case of braking, are given by:

$$J\dot{w} = rF_x - T_b \qquad (1)$$

$$m\dot{v} = -F_x \qquad (2)$$

where m is the mass of the quarter car, v is the velocity over ground of the car, $\omega$ is the angular velocity of the wheel, $F_z$ is the vertical force, $F_x$ is the tire friction force, $T_b$ is the brake torque, r is the wheel radius, J is the wheel inertia and $\alpha_s$ is the wheel slip side angle.

The longitudinal tire slip is defined as:

$$\lambda = \frac{\upsilon - \omega r}{\upsilon} \qquad (3)$$

Hence, a locked wheel ($\omega = 0$) is described by $\lambda=1$, while the free motion of the wheel ($w_r = v$) is described by $\lambda=0$, wherein the term "r" refers to the wheel radius. The tire friction force, $F_x$, is determined by:

$$F_x = F_z\mu(\lambda, \mu_H, \alpha_s, F_z, \upsilon)$$

where $\mu(\lambda, \mu_H, \alpha_s, F_z)$ is the road-tire friction coefficient, a non-linear function with a typical dependence on the slip which is given by the well known "Magic Formula". Within the field of vehicles, the "Magic Formula" refers to a model, known to the skilled person, of calculating the forces acting upon the tires of a vehicle depending on the wheel slip.

According to equation (3) above, the tire slip control problem can be approached using the following model:

$$\dot{\lambda}(t)\upsilon = -\beta\mu(\lambda(t)) + \alpha u(t - T) \qquad (4)$$

where v is considered to be constant but uncertain. In a block diagram form, the model can be represented as in Fig. 3.

Relation (4) is a first order nonlinear differential equation due to the tire friction coefficient function, where $\beta \overset{\Delta}{=} r^2 F_z / J$ and $\alpha \overset{\Delta}{=} r / J.$

Regarding the rear axle 7 regeneration control according to the embodiment, it can be noted that applying the model according to relation (4) for the inner rear wheel during a combined cornering and braking maneuver, one can determine the value of the rear axle braking torque in stationarity to be:

$$T_R = r F_z \mu(\lambda) \qquad (5)$$

Regarding the issue of combined braking and cornering, it can be noted that during regenerative braking, only low slips are allowed due to vehicle stability reasons, i.e. only the linear region of the friction curve is exploited. Then, the friction curve can be approximated by:

$$\mu = \mu_0 c_0 \lambda, \qquad (6)$$

where $\mu_0$ is the maximum friction coefficient and $c_0$ is a tuning parameter.

Furthermore, during combined braking and cornering, the available friction from the contact patch is split between cornering and braking. Moreover, the friction taken up by the cornering depends on the vehicle speed. Then, the friction curve used in relation (5) can be approximated as:

$$\mu = \mu_0 (c_0 + c_1\delta + c_2\delta\upsilon)\lambda, \qquad (7)$$

where $\delta$ is the steering wheel angle, and ci are tuning parameters.

Regarding the dynamic load transfer, the following is noted. Due to the combined braking and cornering, there are both lateral and longitudinal dynamical load transfers, resulting in pitching motions. This phenomenon will be more pronounced the harder the braking and cornering becomes, and the higher the friction is, ut to a physical saturation. The effect of this is twofold.

First, the slope of the maximum rear brake torque is decreasing with increasing friction ($\mu$). This can be proved starting with the torque balances:

$$LW_F = cW + hMa_x, \quad LW_R = bW - hMa_x,$$

where $W = \Sigma W_i$ is the total weight of the vehicle, respectively the weight on each axle. The wheel base is denoted L = c + b, h is the height of the centre of gravity (COG) and M is the total mass of the vehicle.

The second terms of these balance equations are the dynamic load transfers due to the acceleration ax. Assume that the brake force on each axle i is given by:

$$F_{xF} = \mu W_i,$$

since $a_z = (F_{xF} + F_{xR})/M$, then one can solve for the actual friction forces during braking as:

$$F_{xF} = \frac{\mu(\tfrac{c}{L}W + \tfrac{h}{L}F_{xR})}{1 - \mu\tfrac{h}{L}} \qquad (8)$$

and

$$F_{xR} = \frac{\mu(\frac{b}{L}W - \frac{h}{L}F_{xF})}{1 + \mu\frac{h}{L}} \qquad (9)$$

Relation (8) and (9) show that the braking torque will have a decreasing slope for higher frictions, $\mu$ (it decreases approximately as $1/\mu^2$).

Secondly, the value of the rear braking torque will decrease with increasing dynamic load transfer, see equation (9).

To model this behaviour to some extent, equation (5) can be modified according to the following:

$$T_R = r(F_z + c_3 T_T)\mu(\lambda) + T_{offset}, \qquad (10)$$

where $T_T$ is the total braking torque request and $c_3$ and $T_{offset}$ are tuning parameters. The latter parameter is used to fit the level (offset) of the linear approximation with respect to the friction $\mu$ as well the main parameter used for model robustness.

Relation (10) implies that $T_R$ is a bilinear regression, which in turn implies a harder identification or tuning. However, there are many possible solutions for finding the unknown parameters. One way is to cast the problem as a nonlinear least squares problem, and can be solved using standard techniques. The drawback of this approach is that the cost function of the optimisation is a quartic function which is not necessarily convex, i.e. convergence can be a problem. Another way is to solve the problem with a two-stage approach. First, a linear least squares problem for an overparametrized model is solved and then a Frobenius norm approximation is used to obtain the actual parameters. This method guarantees convergence to a global minimum for persistently exciting regressors.

Consequently, the invention provides a feedforward control of the maximum rear axle regeneration in which - putting all the above-mentioned effects together - the model becomes:

$$T_R = T_{offset} + r(F_z + c_3 T_T)\mu_0(c_0 + c_1\delta + c_2\delta\upsilon)\lambda. \qquad (11)$$

The term $\lambda$ is the longitudinal tire-slip in stationarity, corresponding to $T_R$, that is, corresponding to the maximum rear axle regeneration or, in other words, the maximum braking force acting on the rear axle 7. This means that A is a constant in the model and represents the maximum allowed wheel slip, before the regeneration is to be interrupted or rerouted.

Thus, the model has five tuning parameters ($c_i$, $T_{offset}$), three constants (r, $F_z$, A) and three variables ($\mu_0$, v, $\delta$, $T_T$).

In summary, the above-mentioned algorithm, which can be referred to as a "Feed Forward" algorithm, operates by decreasing the rear axle braking torque if the tire/road friction decreases, if the level of steering increases, if the vehicle speed increases or if the driver-requested brake torque increases. The input parameters of the algorithm are preferably the tire/road friction coefficient, the steering wheel angle, the vehicle speed and the driver-requested brake torque. The exact brake torque being applied to the the vehicle is given, as explained above, by a mathematical function derived from a wheel slip model given by the quarter car model.

Furthermore, the main purpose of this "Feed Forward" algorithm is to provide an initial "a priori" estimation of the maximum level of brake torque which can be applied on the rear axle 7 without loss of traction. This is obtained through the fact that the control unit 17 estimates (using the equations above) a value of $T_R$, which is the maximum braking force acting on the rear axle 7. Furthermore, the control unit 17 is arranged to control the operation of the braking means, i.e. the electric motor 13 and the frictions brakes 8, 9, 10, 11, to obtain the desired regenerative braking effect acting on the vehicle 1 as a whole.

The model as described above takes into account road friction, vehicle speed, steering wheel angle and the requested total braking torque so as to improve the stability of the vehicle while maximizing the regenerative braking on the rear axle 7. Two tuning procedures are also suggested, as described above. The principle behind the algorithm mentioned above is to prevent a high wheel slip on the rear axle 7, in particular on the inner rear wheel during a turn. This situation is considered here mainly because it is probably the most "tough" and difficult situation for the braking torque to be distributed in an optimized manner.

The invention can be further improved by means of a stability control system which is monitoring the safety limits for regeneration, e.g. slip, and as long as the vehicle is stable will maximize the the regeneration level. This means that the initial estimate provided by the above-mentioned "Feed Forward" algorithm can be further maximized, in a manner now to be described. This is preferably done by determining an "extremum" value through the use of the friction curve, which describes a relationship between the available friction force and the wheel slip for a given wheel.

With reference to Fig. 3, it can be noted that the nonlinearity shown in said figure is a convex function. In practice, this function is difficult to determine, and at high slips might show complex behaviour that would contradict the convexity assumptions. However, this is of no concern for the proposed algorithm, since the regeneration stability control would actually keep the vehicle operating in the linear region of the friction curve, that is, the algorithm will not be active at high slip conditions, it is only to maximize the braking torque up to a predefined slip value on the linear region of the friction curve.

In order to find the maximum possible braking torque on the rear axle, one can use simple Newton iteration, where the ascent direction is used with a give stepsize that will be the tuning parameter of the algorithm. This step will increase the control signal, i.e. the braking torque, until the maximum of the convex function, i.e. the friction curve, is achieved.

Then the controller will be on the form:

$$u = \int \frac{du}{d\lambda} dt \qquad (12)$$

The derivative of the control signal with regard to the slip is computed through time, that is

$$\frac{du}{d\lambda} = \frac{\frac{du}{dt}}{\frac{d\lambda}{dt}}$$

It is transparent now that this approach cannot be used in practice for fast control of the slip due to the time derivative of the slip signal which is rather noisy. However, for regeneration control, the only requirement is to slowly find a trend that should be applied in the direction of the maximum slip.

It is important to point out that only a constant trend, e.g. ramp, would not be adequate since this has to depend on surface conditions, maneuvers, tire condition etc. The proposed algorithm, on the other hand, will compute the regeneration trend implicitly taking into account any variation in the friction conditions. Moreover, the closer the operating point gets to the nonlinear region, the smaller the regeneration trend applied by the proposed controller will be. Therefore, the control signal can now be written as:

$$u = \int \frac{du_f}{dt} \left(\frac{d\lambda_f}{dt}\right)^{-1} dt \qquad (13)$$

where the subscript f denotes an appropriate low-pass filtering.

The idea above this algorithm is to find a point of maximum friction on the friction curve for the rear axle. This point will never be achieved since the slip safety imposed by the stability control would be exceeded. Nevertheless, a maximization of the regenerative level is achieved within the set safety limits,

In summary, according to an embodiment, the invention comprises an "Extremum seeking" algorithm, which increases the rear axle brake torque in proportion to the slope of the friction curve, i.e. the rate change of rear axle brake torque divided by the rate change of the wheel slip. This algorithm preferably only operates below a certain level of wheel slip. The main purpose of this algorithm is to increase the rear axle brake torque by stable means to fully utilize the tractive force capability or the rear wheels for braking. Furthermore, the algorithm utilizes reactive control.

Furthermore, according to an embodiment, the the control unit 17 is arranged for continually determining the wheel slip $\lambda$ for each of the four wheels 2, 3, 4, 5. Wheel slip occurs as a result of a brake force which is applied to a particular wheel in a manner against the actual rotation of the wheel. Depending on the magnitude of the brake force, the wheel slip $\lambda$ will vary between a value ($\lambda=1$) which corresponds to a situation in which the wheel is locked up and a value ($\lambda=0$) which corresponds to a situation in which the wheel may rotate freely. The invention is preferably arranged so that the wheel slip values of each wheel 2, 3, 4, 5 are obtained by measuring the relative difference in speed between the vehicle 1 and each wheel. In this manner, the control unit 17 is arranged for providing a value of the wheel slip of each one of the four wheels 2, 3, 4, 5.

Furthermore, the control unit 17 is arranged for determining whether the wheel slip $\lambda$ of any of the wheels 2, 3, 4, 5 is higher than a predetermined value $\lambda$ref, which corresponds to a value at which the braking force should not only be applied to the rear axle 7 but should also be partially applied to the front axle 6.

The amount of braking force applied to the front axle 6 is in turn determined by means of a control signal u(t) which is calculated by means of the control unit 17. According to an embodiment of the invention, this control signal u(t) is calculated via a so-called PID-regulator, according to the following relationship:

$$u(t) = K_p*(\lambda ref - \lambda meas) + K_i*\int(\lambda ref - \lambda meas)dt + K_d*d(\lambda ref - \lambda meas)/dt$$

where $K_p$, $K_i$ and $K_d$ are fixed tuning parameters which are determined depending on the actual application and vehicle etc., and also depending on requirements regarding the speed and stability of the regulator. The theory behind the PID-regulator is known as such, and is not described in greater detail here. Furthermore, the term $\lambda ref$ is the desired wheel slip and $\lambda meas$ is the measured wheel slip. More precisely, the term Ameas is preferably the measured wheel slip of the rear wheel having the highest wheel slip.

Consequently, this algorithm is arranged so as to start distributing the brake force between the rear axle 7 and the front axle 6 when the difference between $\lambda ref$ and Ameas exceeds a certain limit.

Furthermore, the invention is preferably arranged to detect which wheel is the closest to wheel lockup on the rear axle 7, i.e. which of the left rear wheel 4 and the right rear wheel 5 is closest to a wheel slip which corresponds to the value $\lambda=1$. Preferably, the limit value is a value of the wheel slip which corresponds to a operating condition in which there is a risk that the vehicle becomes unstable.

The distribution of the brake force between the front axle 6 and the rear axle 7 is active each time braking occurs, i.e. each time the driver of the vehicle 1 presses the brake pedal, which is detected by means of the brake pedal sensor 19 as mentioned above. When the control unit 17 determines that the brake force should not be applied only to the rear axle 7 but also to the front axle 6, this can be achieved by various measures. For example, the control unit 7 may control the operation of the electric motor 13, the friction brakes 8, 9, 10, 11 and optionally also other components such as a brake booster (not shown in the drawings) in order to obtain the desired brake force distribution during regenerative braking. During this process, the control unit 17 is adapted for maximizing the brake force on the rear axle 7.

Consequently, according to this embodiment, the wheel closest to wheel lock is controlled in a manner so that the rear axle braking torque is adjusted. Suitably, the wheel closest to lockup on the rear axle 7 is a natural choice to maintain braking stability.

As a controller, a PID controller is preferably used on the wheel slip chosen to be controlled, and is adequate to stabilize the braking. Since the scope of the control is to keep the wheel slips below a predetermined threshold, for example corresponding to the ABS threshold, a dead-zone is introduced on the control error.

Additionally, in order to improve the robustness of the controller scheduling by vehicle speed can be done as shown in equation (1) mentioned above, i.e. the slip error can is to be multiplied by the vehicle longitudinal speed.

Consequently, the invention preferably comprises a "Feedback" algorithm as described above, which is arranged for controlling the difference between the desired and measured wheel slip values by means of a conventional PID controller. This algorithm only operates above a certain level of wheel slip. The main purpose of the algorithm is to react on higher levels of wheel slip and reduce the amount of rear axle brake torque to prevent the rear wheels from loss of tractive force capability. Furthermore, the algorithm uses reactive control.

Furthermore, the invention is arranged so that the control unit 17 takes different dynamic properties of the vehicle 1 into account, such as the wheel slip and the yaw rate, during the regenerative braking. The purpose of this control is to obtain a braking process wherein the driver of the vehicle 1 does not experience any behaviour of the vehicle 1 which is different from a normal vehicle without regeneration capabilities.

Regenerative braking utilizes the fact that an electric motor can also act as a generator. The vehicle's 1 electric motor is reconnected as a generator during braking and its output is connected to an electrical load (not shown in the drawing). It is this load on the motor that provides the braking effect.

In summary, a principle behind the invention is that the brake force acting to brake the vehicle 1 is gradually moved from the rear axle 7 to the front axle 6 when there is a risk that the vehicle 1 becomes unstable. Consequently, the invention functions so as to maximize regeneration at the rear axle 7 while still maintaining the stability of the vehicle.

According to a particular embodiment of the invention, there is provided a method of obtaining a maximum amount of braking torque being applied on the rear axle 7 while the vehicle 1 is in a stable operating condition. The braking torque is applied by using the electric motor 13, as controlled by the control unit 17.

The main principle of this embodiment is to provide an algorithm which complements a stability control system in the vehicle 1 and which maximizes the level of regenerative braking during stable conditions of the vehicle 1. More precisely, the embodiment is arranged for first providing an algorithm which can be used to complement a stability control system. The idea behind the algorithm is to find the point of maximum friction on the friction curve for the rear axle.

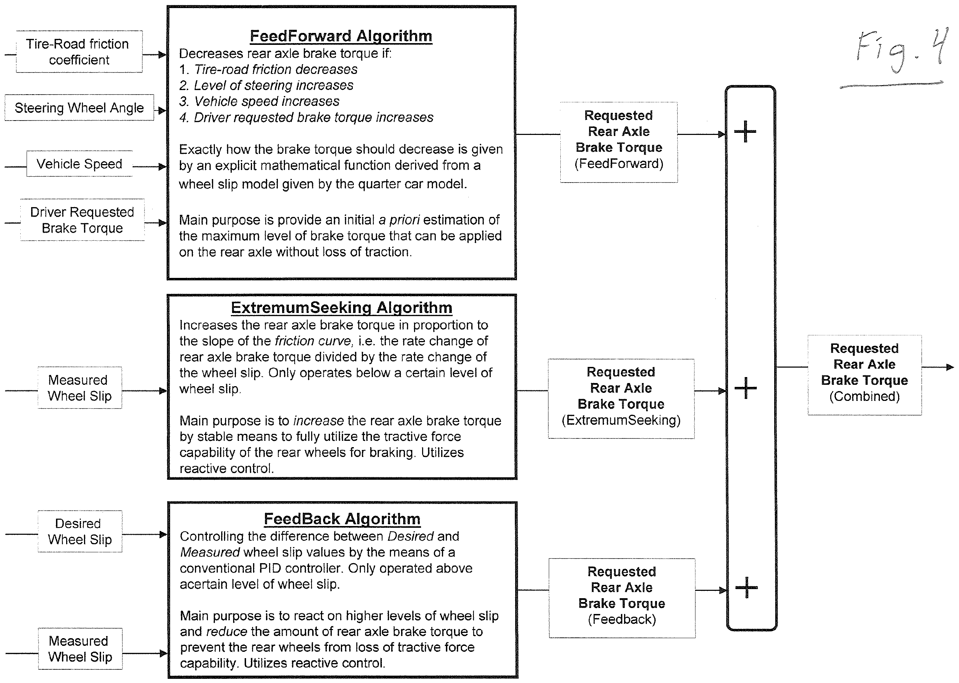

In summary, the invention is arranged so as to control the regenerative braking of the vehicle 1 by using three algorithms, as described above. The algorithms can be used separately or together, in any combination. According to an embodiment, all three algorithms are used together, in a manner as shown in Fig. 4. The so-called "Feed Forward" algorithm is adapted for estimating an initial level of the maximum rear axle braking torque. Furthermore, the so-called "Extremum Seeking" algorithm is provided in order to more fully utilize the available braking torque by seeking an "extreme", i.e. a maximum, value of the applied rear axle braking torque depending on the slope of the friction curve. Finally, the so-called "Feedback" algorithm is used in order to control the difference between the desired and the measured wheel slip values, suitably by means of a PID regulator. All in all, these three algorithms preferably are used in cooperation by means of the control unit 17, in order to fulfill the purpose of the invention, i.e. to maximize the regenerative braking force on the rear axle 7 while still maintaining a stable vehicle.

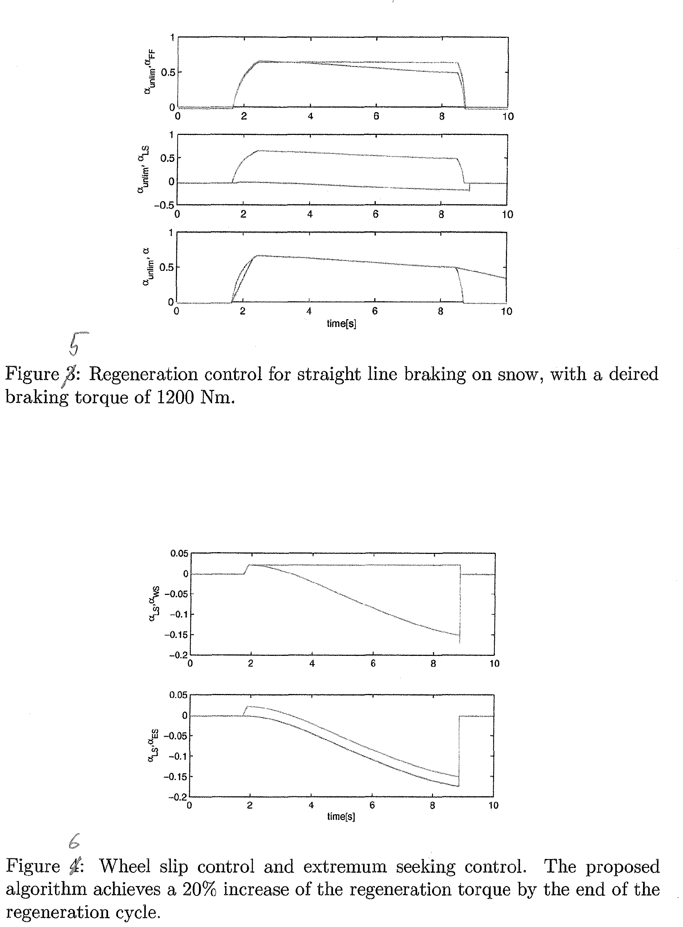

The proposed algorithms have been experimentally tested. The scenario is a straight-line braking on snow with a desired total braking torque of 1200 Nm. The factor $\alpha$ represents the brake torque distribution between the front and rear axle. A value of $\alpha=1$ means that all braking torque is applied on the front axle. Figure 5 shows the contribution of the two regeneration control strategies w.r.t. the total allowed regeneration by the three algorithms together. The feed forward part is denoted $\alpha_F F$, the wheel-slip part together with the extremum seeking control is denoted $\alpha_L S$, while the total, together with the feedforward controller is denoted $\alpha_{unlim}$. The latter signal is rate limited due to hardware concerns, resulting in $\alpha$, the regeneration torque distribution.

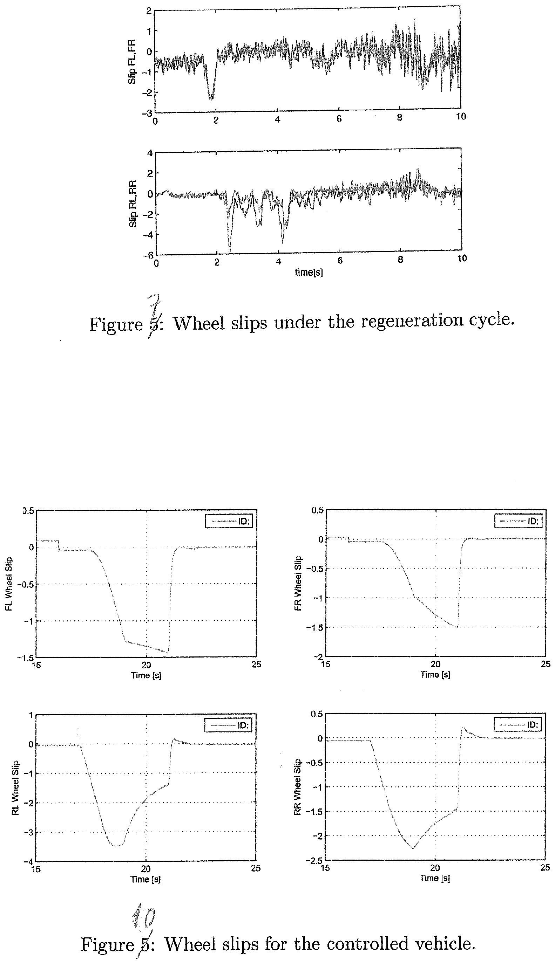

Figure 6 shows the two components of the slip controller, including the extremum seeking controller. Notice that by the end of the regeneration cycle the extremum seeking controller achieves a 20% increase of the regeneration torque. Figure 7 shows the wheel slips under the regeneration cycle.

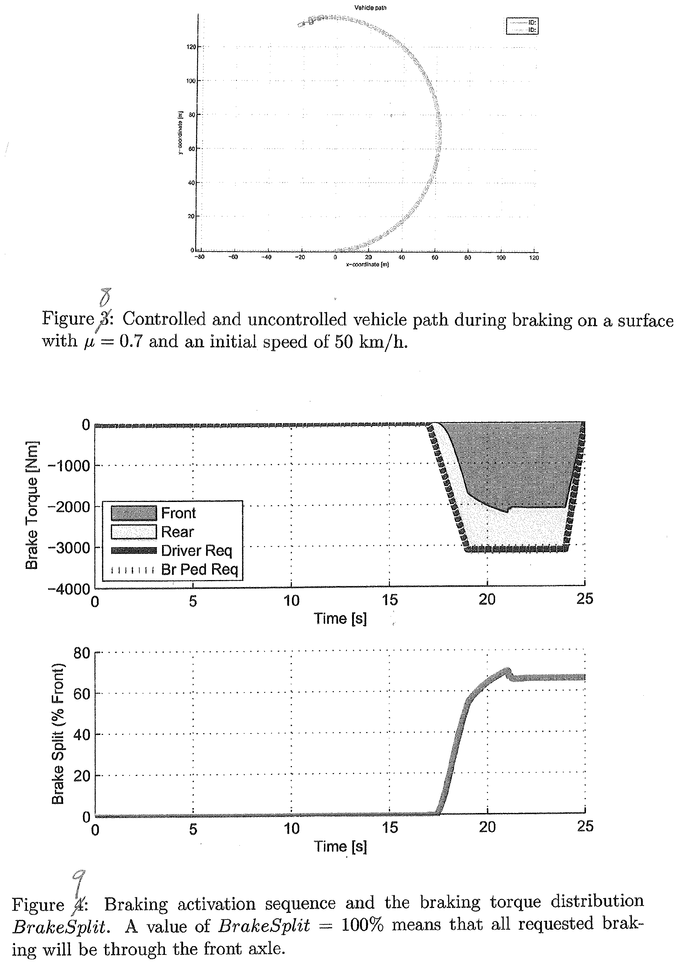

Furthermore, regarding experimental tests, it can be noted that the designed feedback compensation can be used together with a complete vehicle model from the simulation package veDyna. On a surface with $\mu = 0.7$, the manoeuvre is braking in curve as shown in Figure 8, with an initial speed of v = 50 km/h. The steering wheel angle is constant during the simulation, having the value of 50°. Both controlled and uncontrolled vehicle paths are shown. The uncontrolled braking implies that all braking torque is applied on the rear axle, as to maximize the regeneration.

Figure 9 shows the braking activation sequence and the braking torque distribution *BrakeSplit*. A value of *BrakeSplit* = 100% means that all requested braking will be through the front axle. As soon as braking is activated, the controller moves the braking torque to the rear axle maximizing the regeneration.

As soon as the desired braking torque endangers the stability of the vehicle, part of the braking torque is moved to the front axle. Figure 10 shows the wheel slips of the controlled vehicle.

The invention is not limited to the embodiment described above, but may be modified without departing from the scope of the claims below. For example, the invention can be used in different types of vehicles, for example cars, trucks and other types of vehicles and vessels.

Also, the braking force which is applied under control of the control unit 17 can be obtained by means of the electric motor 13, the friction brakes 8, 9, 10, 11 or by any other suitable braking devices.

**Claims**

1. A method for control of regenerative braking in a vehicle (1) being provided with:

   a front axle (6) and a rear axle (7) being provided with front wheels (2, 3) and rear wheels (4, 5);
   an internal combustion engine (12);
   an electric motor (13); and
   a control unit (17) for controlling the operation of the electric motor (13) to selectively be operated either for propelling the rear axle (7) or for braking the rear axle (7) in a regenerative manner;

   said method comprises the steps of:

   estimating a value of the maximum level of braking force being applied to said rear axle (7) by estimating values of the tire/road friction, the level of steering, the vehicle speed and the requested braking torque, to provide an initial "a priori" estimation of the maximum level of brake torque which can be applied on the rear axle without loss of traction;
   decreasing the braking torque being applied on said rear axle (7) if said tire/road friction decrease, or if said level of steering increases, or if said vehicle speed increases, or if said requested braking torque increases;
   wherein the braking torque applied to the rear axle (7) is decreased to a value corresponding to a maximum level of braking torque, however without losing traction of said vehicle (1) ;
   increasing the rear axle (7) braking torque to an extremum value in proportion to the slope of the friction curve of the wheels of said rear axle (7), to achieve a maximization the regenerative level within set safety limits;
   determining a value of the wheel slip ($\lambda$meas) of each of said rear wheels (4, 5);
   determining whether the difference between the wheel slip value ($\lambda$meas) of any of said wheels (4, 5) and a desired wheel slip ($\lambda$ref) exceeds a predetermined limit value; and, if this occurs,

gradually shifting the brake force applied to the vehicle (1) from the rear axle (7) to the front axle (6).

2. The method according to claim 1, **characterized in that** it furthermore comprises:
controlling said difference between the measured wheel slip (λmeas) and the desired wheel slip (λref) by means of a PID-regulator.

3. A vehicle (1) with a regenerative braking device comprising:

a front axle (6) and a rear axle (7) being provided with front wheels (2, 3) and rear wheels (4, 5);
an internal combustion engine (12);
an electric motor (13) and
controllable braking means (13, 8, 9, 10, 11);
said device comprising a control unit (17) for controlling the operation of the electric motor (13) to be selectively operated either for propelling the rear axle (7) or for braking the rear axle (7) in a regenerative manner;
said device furthermore comprises means for estimating a value of the maximum level of braking force being applied to said rear axle (7), to provide an initial "a priori" estimation of the maximum level of brake torque which can be applied on the rear axle without loss of traction, said device furthermore comprises sensor means for detecting values of the tire/road friction, the level of steering, the vehicle speed and the requested braking torque; wherein said control unit (17) is arranged for decreasing the braking torque being applied on said rear axle (7) if said tire/road friction decrease, or if said level of steering increases, or if said vehicle speed increases, or if said requested braking torque increases, by actuating any or all of said braking means (13, 8, 9, 10, 11), for decreasing the braking torque applied to the rear axle (7) to a value corresponding to a maximum level of braking torque, however without losing traction of said vehicle (1), said control unit (17) is arranged for increasing the rear axle (7) braking torque to an extremum value in proportion to the slope of the friction curve of the wheels of said rear axle (7), to achieve a maximization the regenerative level within set safety limits, said device further comprises means for determining a value of the wheel slip (λmeas) of each of said rear wheels (4, 5);
means for determining whether the difference between the wheel slip value (λmeas) of any of said wheels (4, 5) and a desired wheel slip (λref) exceeds a predetermined limit value; and, if this occurs,
gradually shifting the brake force applied to the vehicle (1) from the rear axle (7) to the front axle (6).

**Patentansprüche**

1. Verfahren zum Regeln von regenerativem Bremsen in einem Fahrzeug (1), das ausgestattet ist mit:

einer Vorderachse (6) und einer Hinterachse (7), die ausgestattet sind mit Vorderrädern (2, 3) und Hinterrädern (4, 5);
einem Verbrennungsmotor (12);
einem Elektromotor (13); und
einer Regeleinheit (17) zum Regeln des Betriebs des Elektromotors (13), damit dieser wahlweise entweder zum Antreiben der Hinterachse (7) oder zum Bremsen der Hinterachse (7) in einer regenerativen Weise betrieben wird;

wobei das Verfahren folgende Schritte umfasst:

Schätzen eines Wertes des maximalen Niveaus von Bremskraft, die auf die Hinterachse (7) angewendet wird, durch Schätzen von Werten der Reifen/Straße-Reibung, des Niveaus von Lenkung, der Fahrzeuggeschwindigkeit und des angeforderten Bremsmoments, um eine erste "A-priori-Schätzung" des maximalen Niveaus von Bremsmoment bereitzustellen, das ohne Verlust von Traktion auf die Hinterachse angewendet werden kann;
Verringern des auf die Hinterachse (7) angewendeten Bremsmoments, wenn sich die Reifen/Straße-Reibung verringert, wenn sich das Niveau von Lenkung erhöht, wenn sich die Fahrzeuggeschwindigkeit erhöht oder wenn sich das angeforderte Bremsmoment erhöht;
wobei das auf die Hinterachse (7) angewendete Bremsmoment auf einen Wert verringert wird, der einem maximalen Niveau von Bremsmoment entspricht, ohne jedoch Traktion des Fahrzeugs (1) zu verlieren;
Erhöhen des Bremsmoments der Hinterachse (7) auf einen extremen Wert, proportional zur Neigung der Reibungskurve der Räder der Hinterachse (7), um eine Maximierung des regenerativen Niveaus innerhalb festgelegter Sicherheitsgrenzen zu erreichen;
Bestimmen eines Werts des Radschlupfes (λmeas) von jedem der Hinterräder (4, 5);

Bestimmen, ob die Differenz zwischen dem Radschlupfwert ($\lambda$meas) jedes der Räder (4, 5) und eines gewünschten Radschlupfes ($\lambda$ref) einen vorbestimmten Grenzwert überschreitet; und, wenn dies passiert, allmähliches Umschalten der auf das Fahrzeug (1) angewendeten Bremskraft von der Hinterachse (7) auf die Vorderachse (6).

**2.** Verfahren nach Anspruch 1, **dadurch gekennzeichnet, dass** es ferner Folgendes umfasst:
Regeln der Differenz zwischen dem gemessenen Radschlupf ($\lambda$meas) und dem gewünschten Radschlupf ($\lambda$ref) mittels eines PID-Reglers.

**3.** Fahrzeug (1) mit einer regenerativen Bremsvorrichtung, umfassend:

eine Vorderachse (6) und eine Hinterachse (7), die mit Vorderrädern (2, 3) und Hinterrädern (4, 5) ausgestattet sind;
einen Verbrennungsmotor (12);
einen Elektromotor (13), und
regelbare Bremsmittel (13, 8, 9, 10, 11);
wobei die Vorrichtung eine Regeleinheit (17) zum Regeln des Betriebs des Elektromotors (13) umfasst, damit dieser wahlweise entweder zum Antreiben der Hinterachse (7) oder zum Bremsen der Hinterachse (7) in einer regenerativen Weise betrieben wird;

wobei die Vorrichtung ferner Mittel zum Schätzen eines Wertes des maximalen Niveaus von Bremskraft umfasst, die auf die Hinterachse (7) angewendet wird, um eine erste "A-priori-Schätzung" des maximalen Niveaus von Bremsmoment bereitzustellen, das ohne Verlust von Traktion auf die Hinterachse angewendet werden kann, wobei die Vorrichtung ferner Sensormittel zum Erkennen der Werte der Reifen/Straße-Reibung, des Niveaus von Lenkung, der Fahrzeuggeschwindigkeit und des angeforderten Bremsmoments umfasst;

wobei die Regeleinheit (17) angeordnet ist, um das auf die Hinterachse (7) angewendete Bremsmoment zu verringern, wenn sich die Reifen/Straße-Reibung verringert, wenn sich das Niveau von Lenkung erhöht, wenn sich die Fahrzeuggeschwindigkeit erhöht oder wenn sich das angeforderte Bremsmoment erhöht, durch Betätigen eines oder aller der Bremsmittel (13, 8, 9, 10, 11), um das auf die Hinterachse (7) angewendete Bremsmoment auf einen Wert zu verringern, der einem maximalen Niveau von Bremsmoment entspricht, ohne jedoch Traktion des Fahrzeugs (1) zu verlieren, wobei die Regeleinheit (17) für ein Erhöhen des Bremsmoments der Hinterachse (7) auf einen extremen Wert, proportional zur Neigung der Reibungskurve der Räder der Hinterachse (7), angeordnet ist, um eine Maximierung des regenerativen Niveaus innerhalb festgelegter Sicherheitsgrenzen zu erreichen, wobei die Vorrichtung ferner Mittel zum Bestimmen eines Werts des Radschlupfes ($\lambda$meas) von jedem der Hinterräder (4, 5) umfasst;
Mittel zum Bestimmen, ob die Differenz zwischen dem Radschlupfwert (Ameas) jedes der Räder (4, 5) und einem gewünschten Radschlupf ($\lambda$ref) einen vorbestimmten Grenzwert überschreitet; und, wenn dies passiert, allmähliches Umschalten der auf das Fahrzeug (1) angewendeten Bremskraft von der Hinterachse (7) auf die Vorderachse (6).

**Revendications**

**1.** Procédé de commande du freinage par récupération dans un véhicule (1) comprenant :

un essieu avant (6) et un essieu arrière (7) munis de roues avant (2, 3) et de roues arrière (4, 5) ;
un moteur à combustion interne (12) ;
un moteur électrique (13) ; et
une unité de commande (17) pour commander le fonctionnement du moteur électrique (13) pour qu'il soit sélectivement actionné soit pour propulser l'essieu arrière (7) soit pour freiner l'essieu arrière (7) par récupération ;
ledit procédé comprenant les étapes consistant à :

estimer une valeur du niveau maximal de force de freinage appliquée audit essieu arrière (7) en estimant des valeurs du frottement pneumatique/route, du niveau de direction, de la vitesse du véhicule et du couple de freinage demandé, pour fournir une estimation initiale « a priori » du niveau maximal de couple de freinage qui peut être appliqué sur l'essieu arrière sans perte de traction ;

diminuer le couple de freinage appliqué sur ledit essieu arrière (7) si ledit frottement pneumatique/route diminue, ou si ledit niveau de direction augmente, ou si ladite vitesse du véhicule augmente, ou si ledit couple de freinage demandé augmente ;

le couple de freinage appliqué à l'essieu arrière (7) étant diminué à une valeur correspondant à un niveau maximal de couple de freinage, toutefois sans perte de traction dudit véhicule (1) ;

augmenter le couple de freinage de l'essieu arrière (7) à une valeur extrême proportionnelle à la pente de la courbe de frottement des roues dudit essieu arrière (7), pour obtenir une maximisation du niveau de récupération dans des limites de sécurité fixées ;

déterminer une valeur du patinage ($\lambda$meas) de chacune desdites roues arrière (4, 5) ;

déterminer si la différence entre la valeur du patinage ($\lambda$meas) de l'une quelconque desdites roues (4, 5) et un patinage souhaité ($\lambda$ref) dépasse une valeur limite prédéfinie ; et, si cela se produit,

déplacer progressivement la force de freinage appliquée au véhicule (1) de l'essieu arrière (7) à l'essieu avant (6).

**2.** Procédé selon la revendication 1, **caractérisé en ce qu'**il comprend en outre l'étape consistant à :
commander ladite différence entre le patinage mesuré ($\lambda$meas) et le patinage souhaité ($\lambda$ref) à l'aide d'un régulateur PID.

**3.** Véhicule (1) avec un dispositif de freinage par récupération comprenant :

un essieu avant (6) et un essieu arrière (7) munis de roues avant (2, 3) et de roues arrière (4, 5) ;
un moteur à combustion interne (12) ;
un moteur électrique (13) et
un moyen de freinage pouvant être commandé (13, 8, 9, 10, 11) ;
ledit dispositif comprenant une unité de commande (17) pour commander le fonctionnement du moteur électrique (13) pour qu'il soit sélectivement actionné soit pour propulser l'essieu arrière (7) soit pour freiner l'essieu arrière (7) par récupération ;
ledit dispositif comprenant en outre un moyen pour estimer une valeur du niveau maximal de force de freinage appliquée audit essieu arrière (7), pour fournir une estimation initiale « a priori » du niveau maximal de couple de freinage qui peut être appliqué sur l'essieu arrière sans perte de traction, ledit dispositif comprenant en outre un moyen capteur pour détecter des valeurs du frottement pneumatique/route, du niveau de direction, de la vitesse du véhicule et du couple de freinage demandé ;
ladite unité de commande (17) étant conçue pour diminuer le couple de freinage appliqué sur ledit essieu arrière (7) si ledit frottement pneumatique/route diminue, ou si ledit niveau de direction augmente, ou si ladite vitesse du véhicule augmente, ou si ledit couple de freinage demandé augmente, en actionnant un ou tous lesdits moyens de freinage (13, 8, 9, 10, 11), pour diminuer le couple de freinage appliqué à l'essieu arrière (7) à une valeur correspondant au niveau maximal de couple de freinage, toutefois sans perte de traction dudit véhicule (1), ladite unité de commande (17) étant conçue pour augmenter le couple de freinage de l'essieu arrière (7) à une valeur extrême proportionnelle à la pente de la courbe de frottement des roues dudit essieu arrière (7), pour obtenir une maximisation du niveau de récupération dans des limites de sécurité fixées, ledit dispositif comprenant en outre un moyen pour déterminer une valeur du patinage ($\lambda$meas) de chacune desdites roues arrière (4, 5) ;
un moyen pour déterminer si la différence entre la valeur du patinage ($\lambda$meas) de l'une quelconque desdites roues (4, 5) et un patinage souhaité ($\lambda$ref) dépasse une valeur limite prédéfinie ; et, si cela se produit,
déplacer progressivement la force de freinage appliquée au véhicule (1) de l'essieu arrière (7) à l'essieu avant (6).

Fig. 1

Fig. 2

$$F_z$$

$$\omega \qquad v$$

$$T_b$$

$$F_x$$

Fig. 3

$$\beta\mu(\lambda)$$

$$u \quad \boxed{e^{-sT}} \quad T_b \quad \boxed{\alpha} \quad \xrightarrow{\;-\;} \bigoplus_{+} \quad \boxed{\dfrac{1}{vs}} \quad \lambda$$

14

Tire-Road friction coefficient

Steering Wheel Angle

Vehicle Speed

Driver Requested Brake Torque

**FeedForward Algorithm**
Decreases rear axle brake torque if:
1. *Tire-road friction decreases*
2. *Level of steering increases*
3. *Vehicle speed increases*
4. *Driver requested brake torque increases*

Exactly how the brake torque should decrease is given by an explicit mathematical function derived from a wheel slip model given by the quarter car model.

Main purpose is provide an initial *a priori* estimation of the maximum level of brake torque that can be applied on the rear axle without loss of traction.

Requested Rear Axle Brake Torque (FeedForward)

+

Measured Wheel Slip

**ExtremumSeeking Algorithm**
Increases the rear axle brake torque in proportion to the slope of the *friction curve,* i.e. the rate change of rear axle brake torque divided by the rate change of the wheel slip. Only operates below a certain level of wheel slip.

Main purpose is to *increase* the rear axle brake torque by stable means to fully utilize the tractive force capability of the rear wheels for braking. Utilizes reactive control.

Requested Rear Axle Brake Torque (ExtremumSeeking)

+

Requested Rear Axle Brake Torque (Combined)

Desired Wheel Slip

**FeedBack Algorithm**
Controlling the difference between *Desired* and *Measured* wheel slip values by the means of a conventional PID controller. Only operated above acertain level of wheel slip.

Main purpose is to react on higher levels of wheel slip and *reduce* the amount of rear axle brake torque to prevent the rear wheels from loss of tractive force capability. Utilizes reactive control.

Measured Wheel Slip

Requested Rear Axle Brake Torque (Feedback)

+

Fig. 4

EP 2 172 378 B1

Figure 3: Regeneration control for straight line braking on snow, with a deired braking torque of 1200 Nm.

Figure 4: Wheel slip control and extremum seeking control. The proposed algorithm achieves a 20% increase of the regeneration torque by the end of the regeneration cycle.

Figure 7: Wheel slips under the regeneration cycle.

Figure 10: Wheel slips for the controlled vehicle.

Figure 3: Controlled and uncontrolled vehicle path during braking on a surface with $\mu = 0.7$ and an initial speed of 50 km/h.

Figure 4: Braking activation sequence and the braking torque distribution *BrakeSplit*. A value of *BrakeSplit* = 100% means that all requested braking will be through the front axle.

**EP 2 172 378 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004046448 A
- US 7001306 B